# EUROPÄISCHE PATENTANMELDUNG

(11) **EP 0 893 857 A2**
(43) Veröffentlichungstag der Anmeldung: **27.01.1999**
(21) Anmeldenummer: 98107660.7
(22) Anmeldetag: 28.04.1998
(51) Int. Cl.: H01R 23/02, H01R 13/62, H01R 13/52

(54) **Heizleiter-Verbindungssystem in einem Flugzeug**

(30) Priorität: 23.06.1997 DE 19726419
(71) Anmelder: Daimler-Benz Aerospace Airbus Gesellschaft mit beschränkter Haftung, 21129 Hamburg (DE)
(72) Erfinder: Kirma, Safa, Dipl.-Ing., 22880 Wedel (DE); Stöver, Heinz, Dipl.-Ing., 21684 Stade (DE); Pfeiff, Joachim, Dipl.-Ing., 21629 Neuwulmsdorf (DE); Erdmann, Wolfgang, Dipl.-Ing., 21614 Buxtehude (DE)
(74) Vertreter: Hansmann, Dierk, Dipl.-Ing.

(57) **Zusammenfassung**

Die Erfindung bezieht sich auf ein Heizleiter-Verbindungssystem in einem Flugzeug gemäß dem Oberbegriff des Anspruchs 1.

Mit ihr wird das Heizleiter-Verbindungssystem derart gestaltet, daß sich die technischen Bestandteile der ihm integrierten Heizleiter-Anordnungen durch verbessertes Dichtverhalten unter Eliminierung der Kapillarwirkung bei Vibrationen, Schock, Wärmewechsel und niedrigen Druckverhältnissen, denen sie umgebungsgemäß im inneren Umfeld eines Flugzeuges ausgesetzt sind, auszeichnen. Die Integration der Heizleiter-Anordnungen zum Heizleiter-Verbindungssystem geschieht unkompliziert, wobei die einzelne Heizleiter-Anordnung sich wirtschaftlich herstellen und leicht montieren und dem Heizleiter-Verbindungssystem einfach austauschen läßt, wobei die Ausschußrate bei der Herstellung auf ein Minimum reduziert wird.

Das Heizleiter-Verbindungssystem umfaßt mehrere Heizleiter-Anordnungen, die sich mittels elektrischer Kupplungselemente miteinander elektrisch kuppeln lassen. Alle Heizleiter-Anordnungen weisen wenigstens ein Kupplungselement, das als elektrischer Stift- oder Buchsenstecker ausgebildet ist, auf. Dabei ist der Stift- und / oder der Buchsenstecker der einzelnen Heizleiter-Anordnung mit einem Heizband verbunden, derart, daß sich der Stiftstecker einer ersten Heizleiter-Anordnung mit dem Buchsenstecker einer zweiten Heizleiter-Anordnung, die sich paarweise gegenüberstehen und einen elektrischen Kuppelbereich bilden, elektrisch kuppeln und mechanisch verriegeln läßt.

## Beschreibung

Die Erfindung bezieht sich auf ein Heizleiter-Verbindungssystem in einem Flugzeug gemäß dem Oberbegriff des Anspruchs 1.

Es ist bekannt, daß miteinander verbundene Heizbänder, die an den Rohrleitungen eines Flugzeuges befestigt sind, zu deren Beheizung eingesetzt sind, um einen aktiven Frostschutz an den Rohrleitungen und Armaturen sowie dem Zubehör, in denen flüssige Produkte transportiert werden, zu gewährleisten. Sie bilden ein Heizleiter-Verbindungssystem, das vom elektrischen Bordnetz des Flugzeuges intern mit Energie vorsorgt wird. Die Verbindungstechnologie der Heizbänder berücksichtigt, das die anschlußseitigen Enden des einzelnen Heizband verschiedenen vorgelagerten Arbeitsgängen unterzogen werden, um die elektrischen Leitungsanschlüsse des Heizbandes zur Verbindung mit einem weiteren Heizband oder mit dem Bordnetz vorzubereiten. Dabei werden dem außen- und innenseitig abgemantelten Heizband die elektrischen Leitungen freigelegt, wobei das Heizelement entsprechend gekürzt wird. Der Isolation der Leitungen (Anschlußadern) wird nachfolgend Klebe-/Vergußmasse aufgetragen, wobei ein die Isolationen der Leitungen und die Klebe-/Vergußmasse vollständig umhüllender Schrumpfschlauch, der diesem Aufbau aufgeschoben wird, nach seiner Verklebung (mit diesem Aufbau) und nach Aushärtung der Klebe-/Vergußmasse den Übergang der Leitungen und das Heizelement am abgesetzten Ende des Innenmantels isoliert und abdichtet. Die Leitungen (ohne das dem Innenmantel aufliegende Schutzleiter-Geflecht) besitzen eine Länge, wonach sie die Funktion einer Verlängerungsleitung innerhalb des Heizleiter-Verbindungssystems ausüben. In einer nachgeordnete Maßnahme erfolgt die Auskämmung und Verdrillung des Schutzleiter-Geflechtes, wobei ein Stoßverbinder (Quetschverbinder) das verdrillte freie Ende des Schutzleiter-Geflechtes und eine zusätzliche Verlängerungsleitung, der beiden aufgequetscht wird, elektrisch verbindet. Die zusätzliche Verlängerungsleitung besitzt die Länge der elektrischen Leitungen des Heizbandes, wobei die freien Enden dieser abisolierten Leitungen mit einem Stiftkontakt verquetscht werden. Dem Übergangsbereich des Schutzleiter-Geflechtes wird an der Stelle des außen abgemantelten Heizbandes (oberhalb dem Schrumpfschlauch, der den elektrischen Leitungen aufgeschrumft wurde,) Klebe-/Vergußmasse aufgetragen, wobei diesem Aufbau zusätzlich ein weiterer Schrumfschlauch aufgeschrumpft wird.

Der weitere Schrumpfschlauch isoliert am abgesetzten Ende des Außenmantels des Heizbandes nach seiner Verklebung (mit dem Aufbau) und Aushärtung der Klebe-/Vergußmasse den vorbeschriebenen Heizband-Anschluß. Dadurch wird erreicht, daß der vorbereitete Heizband-Anschluß die vorgeschriebenen Dichtigkeitsanforderungen im Flugzeugbau gewährleistet.

Die elektrische Verbindung der Heizbänder zueinander oder des Heizbandes mit der Bordleitung geschieht dann folgendermaßen, wonach die Stiftkontakte, die den freien Enden der elektrischen Leitungen und der (dem Schutzleiter-Geflecht angeschlossene) zusätzlichen Verlängerungsleitung angequetscht sind, separat in einen Durchgangsstecker eingesteckt werden. Danach werden über die Durchgangsstecker alle elektrischen Verbindungen der Heizbänder miteinander und des ihnen angeschlossenen Bordnetzes realisiert.

Der Heizband-Anschluß verfügt über eine unförmige Geometrie und besteht aus Klebe/Vergußmasse und mehreren Schrupfschläuchen. Dabei wird dem am Heizband-Anschluß vorbereiteten Aufbau manuell Klebe-/Vergußmasse aufgetragen, mit mehreren Schrumfschläuchen überzogen und anschließend jede Verklebung einzeln im Ofen getrocknet und ausgehärtet. Durch diese erreichte unförmige Geometrie besteht die Gefahr, daß sich keine gleichbleibende Qualität gewährleisten läßt und das Dichteverhalten bei extrem niedrigen Druckverhältnissen und Temperaturschwankungen beeinträchtigt wird. Außerdem besteht die Gefahr, daß der überzogene Schrumpfschlauch durch die (mit mehreren Absätzen erzielte) unförmige Geometrie eine Rißbildung verursachen kann. Dadurch entsteht eine Beeinträchtigung der Funktion des Heizband-Anschlußes und der Sicherheit des Heizbandes, wodurch die Versorgungszuverlässigkeit eines integrierten Heizleiter-Verbindungssystems gefährdet wird.

Weiterhin besitzt die vorgestellte Technologie den Nachteil, daß die elektrischen Leitungen des Heizbandes (ohne dem Schutzleiter-Geflecht) funktionell als Verlängerungsleitungen ausgelegt sind. Nur das Schutzleiter-Geflecht wird mittels Stoßverbinder mit einer zusätzlichen Verlängerungsleitung verbunden. Dabei müssen die Leitungen entsprechend abgelängt und abisoliert werden.

Diese Maßnahme erfordert einen erheblichen Arbeitsaufwand, wobei die Gefahr besteht, daß einige Litzen der Leiter beschädigt und deren Oberflächenschutz verletzt werden kann. Auch trägt das manuelle Auftragen der Klebe-/Vergußmasse auf die Leitungen und das nachträgliche Aufschieben der Schrumpfschläuche nicht zur Einschränkung des technologischen Aufwandes bei. Die Auftragung der Klebe-/Vergußmasse ist für das Verkleben der Schrumpfschläuche zur Gewährleistung der Dichtigkeit und zur Vermeidung der möglichen Kapillarwirkung unerläßlich. Ebenso wird durch die elektrische Verbindung: " Schutzleiter-Geflecht mit der zusätzlichen Verlängerungsleitung " mittels Stoßverbinder dessen Lage und Integration innerhalb des Heizband-Anschlusses nicht exakt definiert und eine vollständige (100 %-ige) Kapillarwirkung wegen eines Durchgangsloches im Stoßverbinder (Quetschverbinder) nicht vermieden. Das mehrfache Trocknen oder Aushärten wegen Verkleben der Schrumpfschläuche (technologisch bedingte Wärmebehandlung) trägt keinesfalls zur Einschränkung des technologischen Aufwandes bei. Außerdem muß das Heizelement und die zugehörigen elektrischen Leitungen mit einem Schrumpfschlauch verklebt und abgedichtet werden. Eine abschließende Wärmebehandlung für einen zusätzlichen äußeren Schrumpfschlauch, der die zusätzliche Dichtung und den äußerer mechanischen Schutz des vorbereiteten Heizband-Anschlusses realisiert, strapaziert die technologischen Aufwand zusätzlich der vorbeschriebenen qualitativen technischen Nachteile erheblich. Mit dem vorbeschriebenen Herstellungsaufwand lassen sich keine Heizband-Anschlüsse wirtschaftlich fertigen. Eine (Vor-)Fertigung der (zu installierenden) Heizbänder für ein Flugzeug läßt sich nach dem geschilderten Stand der Technik nicht wirtschaftlich umsetzen.

Demzufolge liegt der Erfindung die Aufgabe zugrunde, ein gattungsgemäßes Heizleiter-Verbindungssystem in einem Flugzeug derart zu gestalten, daß sich die technischen Bestandteile der ihm integrierten Heizleiter-Anordnungen durch verbessetres Dichtverhalten unter Eliminierung der Kapillarwirkung bei Vibrationen, Schock, Wärmewechsel und niedrigen Druckverhältnissen, denen sie umgebungsgemäß im inneren Umfeld eines Flugzeuges ausgesetzt sind, auszeichnen. Dabei soll das Heizleiter-Verbindungssystem sich für andere Einsatzbereiche zum Schutz gefährdeter Systeme (Frostschutz-und Produktbeheizung) beliebig erweitern lassen, wobei das Heizleiter-Verbindungssystem mit elektrisch lösbaren Heizleiter-Verbindungen verwirklicht werden soll. Die Integration der Heizleiter-Anordnungen zu einem Heizleiter-Verbindungssystem soll unkompliziert geschehen, wobei die einzelne Heizleiter-Anordnung sich wirtschaftlich herstellen und leicht montieren und dem Heizleiter-Verbindungssystem einfach austauschen lassen soll und wobei die Ausschußrate bei der Herstellung auf ein Minimum reduziert wird.

Diese Aufgabe wird durch die im Anspruch 1 angegebenen Maßnahmen gelöst. In den weiteren Unteransprüchen sind zweckmäßige Ausgestaltungen angegeben.

Die Erfindung ist in einem Ausführungsbeispiel anhand der Zeichnungen näher beschrieben. Es zeigen
- Fig. 1: das Heizleiter-Verbindungssystem mit zwei elektrisch kuppelbaren Heizleiter-Anordnungen;
- Fig. 2: den einzelnen Stiftstecker einer Heizleiter-Anordnung mit einer unlösbar verbundenen Heizbandleitung;
- Fig. 3: den einzelnen Buchsenstecker einer Heizleiter-Anordnung mit einer unlösbar verbundenen Heizbandleitung;
- Fig. 4: die elektrische Kupplung des Buchsensteckers mit dem Stiftstecker im mechanisch verriegelten Zustand.

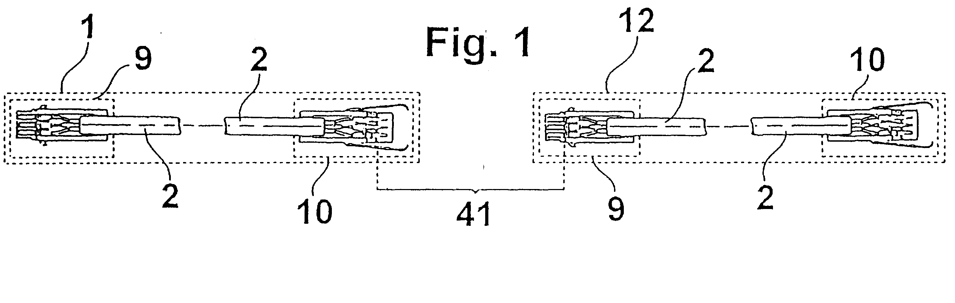

Das in einem Flugzeug eingesetzte Heizleiter-Verbindungssystem, das man zum Schutz gefährdeter Rohrleitungs-Verbindungssysteme installiert, wird dort zum (prophylaktischen) Frostschutz und zur Produktbeheizung, vorwiegend zur Beheizung der Frisch-und Abwassersysteme, genutzt. Es ist dermaßen konzipiert, wonach sich im Störungsfall auch einzelne Abschnitte des Heizleiter-Verbindungssystems problemlos und ohne größeren Aufwand ersetzen lassen.
Nach der Fig. 1 besteht das Heizleiter-Verbindungssystems aus zwei Heizleiter-Anordnungen 1, 12, die sich paarweise gegenüberstehen und mittels geeigneter Kuppelelemente, die endseitig der einzelnen Heizleiter-Anordnung 1, 12 angeordnet sind, sich innerhalb ihres Kuppelbereiches 41 elektrisch kuppeln und mechanisch verriegeln lassen.
Gemäß dieser Ausführung lassen sich seriell mehrerer Heizleiter-Anordnungen 1, 12 bis zu einer n-ten Heizleiter-Anordnung derartig miteinander elektrisch kuppeln. Sie ergeben eine Heizleiter-Kette, die sich gleichermaßen erweitern läßt. Alle Heizleiter-Anordnungen 1, 12 bis zur (am Ende der Heizleiter-Kette installierten) n-ten Heizleiter-Anordnung weisen Kupplungselemente auf, die paarweise oder am Ende der Heizleiter-Kette allein mit einem Heizband 2 verbunden sind. Dabei ist das betreffende Heizband 2 der einzelnen Heizleiter-Anordnung 1, 12 bis zur n-ten Heizleiter-Anordnung jeweils an der Rohrleitung des zu beheizenden Frisch- oder Abwassersystems befestigt.

Die einzelne Heizleiter-Anordnung 1, 12 ... bis zur (n-1 )-ten Heizleiter-Anordnung, die der n-ten Heizleiter-Anordnung unmittelbar seriell vorgeordnet ist, besteht aus zwei Kupplungselementen, die ihr endseitig angeordnet sind. Das einzelne Kupplungselement ist jeweils am freien Ende des Heizbandes 2 mit letzterem verbunden.

Nach einer weiteren (nicht näher beschriebenen) Ausführungsform einer Heizleiter-Anordnung sind zwei Heizbänder 2 einem (nicht gezeigten) Anschlußmodul ein- und ausgangsseitig unlösbar angeschlossen, wobei die freien Enden dieser beiden angeschlossenen Heizbänder 2 ebenfalls unlösbar mit einem Kupplungselement unlösbar verbunden sind. Diese Ausführungsform einer Heizleiter-Anordnung wäre besonders im Reparaturfall für ein elektrisch gestörtes Heizband (Kurzschlußfall) oder ein mechanisch verletztes Heizband 2 interessant, weil dann die auf der (installierten) Heizbandlänge lokalisierte Störung durch Trennung des Heizbandes 2 an der Störungsstelle und Verbindung der (an der Trennstelle) erhaltenen freien Heizbandenden mit dem Anschlußmodul beseitigt (aufgehoben) werden kann.

Außerdem wird erwähnt, daß die n-te Heizleiter-Anordnung, die die Heizleiter-Kette beendet, aus einem Kupplungselement, das mit dem (die Heizband-Kette beendenden) Heizband 2 verbundenen ist, besteht. Das Kupplungselement dieser n-ten Heizleiter-Anordnung wird mit dem betreffenden Kupplungselement der (n-1 )-ten Heizleiter-Anordnung elektrisch gekuppelt. Das dieser n-ten Heizleiter-Anordnung angeschlossene (und die Heizband-Kette beendende) Heizband 2 ist am freien Ende mit einer Heizband-Endkappe versehen. Die elektrischen Leitungen dieses Heizbandes 2, das die Heizband-Kette abschließt, sind am Heizbandende nicht miteinander verbunden. Die elektrischen Leitungen des (die Heizband-Kette beendenden) Heizbandes sind zueinander elektrisch isoliert und allseitig von einer Klebe-/Vergußmasse 19 umgeben. Durch diese Maßnahme ist das freie Ende diese Heizbandes 2 vollständig gegen Feuchtigkeits- und Flüssigkeitseintritt bei extrem niedrigen Druckverhältnissen zur Gewährleistung der Dichtigkeitsanforderungen abdichtet.

In der Fig. 1 ist das Heizleiter-Verbindungssystem mit zwei elektrisch gekuppelten Heizleiter-Anordnungen 1, 12 dargestellt, die in Serie geschalten sind. Beide Heizleiter-Anordnungen 1, 12 besitzen einen gleichen Aufbau. Sie bestehen aus einem Buchsenstecker 9 und einem Stiftstecker 10, die beide als Kupplungselemente eingesetzt sind und direkt mit einem Heizband 2 verbunden sind. Dabei stehen sich der Stiftstecker 10 der ersten Heizleiter-Anordnung 1 und der Buchsenstecker 9 der zweiten Heizleiter-Anordnung 12 (im beabsichtigten Fall der elektrischen Kupplung der beiden Heizleiter-Anordnungen 1, 12) paarweise gegenüber und bilden einen Kupplungsbereich 41.

Innerhalb diesem läßt sich der Stiftstecker 10 der ersten Heizleiter-Anordnung 1 dem Buchsenstecker 9 der zweiten Heizleiter-Anordnung 12 einführen, so daß die aufeinander abgestimmten Verbindungselemente 7 beider Stecker (vorgreifend der Darstellung nach der Fig. 4) miteinander elektrisch verbunden sind. Die (ebenfalls in der Fig. 4 gezeigte) mechanische Verriegelung des Stiftsteckers 10 mit dem Buchsenstecker 9 beugt propylaktisch dem unbeabsichtigten Aufheben der elektrischen Kupplung durch Lösung der miteinander elektrisch verbundenen Verbindungselemente 7 der beider Stecker infolge möglicherweise übertragener Vibrationen und Erschütterungen oder sonstiger mechanischer Einwirkungen auf die seriell verbundenen Heizleiter-Anordnungen 1, 12 vor.

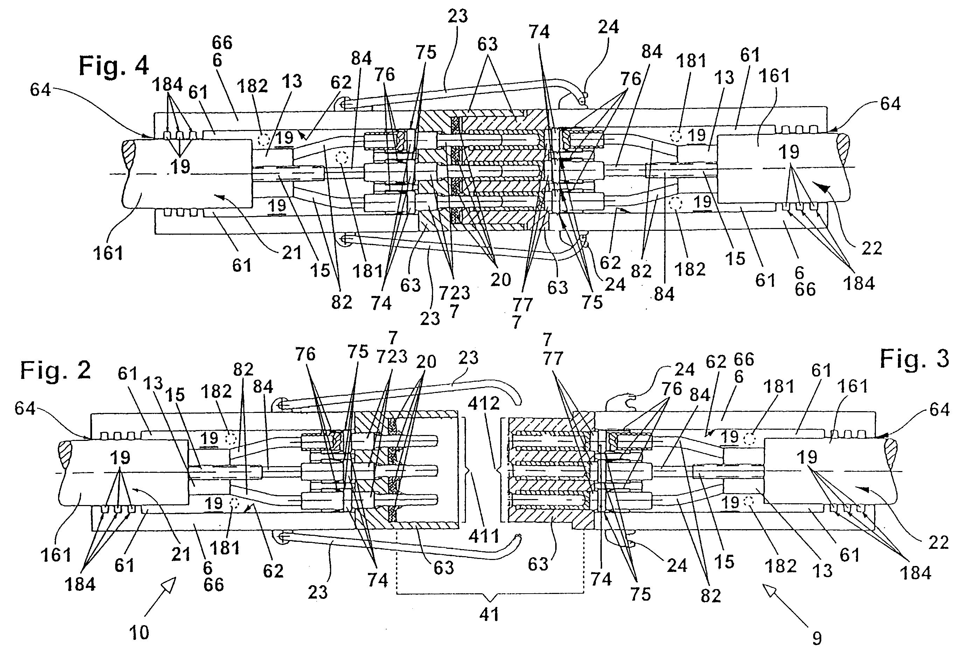

Die unlösbare elektrische Verbindung des Heizbandes 2 mit dem Buchsen-oder Stiftstecker 9, 10 ist in den Figuren 2 und 3 (als Detaildarstellung) eingehender dargestellt, wobei bei direkter Verbindung (direktem Anschluß der freien Enden) des gleichen Heizbandes 2 mit den (an die) beiden Stecker sich der Aufbau der einzelnen Heizleiter-Anordnungen 1, 12 nach der Fig. 1 ergibt.
Bei den Ausführungen nach den Figuren 2 und 3 besitzt der Buchsen- oder Stiftstecker 9, 10 ein elektrisches Anschlußgehäuse 6, das mit Bestandteil eines jeden Steckers ist und sich aus einem offenen Gehäuseunterteil 66 und einem (nicht dargestellten) Gehäusedeckel zusammengesetzt. Das Gehäuseunterteil 66 und der Gehäusedeckel, der dem Gehäuseunterteil 66 (nach der Realisierung aller elektrischen Leitungsanschlüsse des Heizbandes 2 an die besagten Verbindungselemente 7 innerhalb des offenen Bereiches des Gehäuseunterteiles 66) aufliegt, werden miteinander kraft- und / oder formschlüssig verbunden.

Die Körperverbindung dieser beider Gehäuseteile, die aus einem (nichtleitenden) Kunststoff bestehen, wird durch Kunststoff-HF-Verschweißung des Gehäuseunterteiles 66 mit denen des Gehäusedeckels, beispielsweise durch Ultraschall, geschehen. Alternativ wäre eine mechanische dichte Umklammerung der Gehäuseteile oder ein mechanisches dichtes Aufliegen der Gehäuse-Deckelwandung auf der (freiliegenden) Gehäusewandung des Gehäuseunterteiles 66 durch eine Schraubbefestigung der beiden Gehäuseteile ebenfalls denkbar.
Das Anschlußgehäuse 6 besitzt im körperverschweißten oder befestigten Endzustand der beiden Gehäuseteile eine quaderförmige Form, wobei dem Gehäuseunterteil 66 stirnseitig der (des) Verbindungselemente(s) 7 eine Gehäuseeinführung 64 zum Einführen des Heizbandes 2 ausgenommen ist.

Es wird erwähnt, daß man am Anfang der erwähnten Heizleiter-Kette eine Heizleiter-Anordnung anordnet, die, ähnlich dem Aufbau der (am Ende der Heizleiter-Kette installierten) n-ten Heizleiter-Anordnung, aus einem Kupplungselement (Buchsen- oder Stiftstecker 9, 10), das mit dem elektrische Energie einspeisenden Bordnetz des Flugzeuges verbundenen ist, besteht. Das Kupplungselement dieser anfänglich der Heizleiter-Kette installierten Heizleiter-Anordnung wird dann mit dem betreffenden Kupplungselement (Buchsen- oder Stiftstecker 9, 10) der ersten Heizleiter-Anordnung 1 elektrisch gekuppelt, wobei (bei dieser Ausführung) durch die (dem Gehäuseunterteil 66 ausgenommene) Gehäuseeinführung 64 (hier: drei Gehäuseeinführungen 64) zum Einführen der ein-oder mehradrig (hier: mit drei einadrigen Leitungen) ausgeführten Bordnetzleitung oder (aus technischen Gründen) eine dementsprechend ein- oder mehradrig (hier: mit drei einadrigen Leitungen) ausgeführte Verlängerungsleitung, die dann der Bordnetzleitung elektrisch zu kuppeln wäre(n), ausgenommen ist. Die elektrischen Leitungen der Bordnetz-oder der Verlängerungsleitung sind den Verbindungselementen 7 dieses Kupplungselementes (entsprechend der nachbeschriebenen Verbindungstechnologie gemäß dem Beispiel des Anschlusses des Heizbandes 2 an diese Verbindungselemente 7) anzuschließen. Sind der (anfänglich der Heizleiter-Kette) installierten Heizleiter-Anordnung flexible elektrische Leitungen angeschlossen, dann ist am abgemantelten freien (nicht angeschlossenen) Ende der einzelnen Leitung den (verdrillten) Kupferlitzen ein Stiftkontakt angequetscht.

Der Stiftkontakt läßt sich einem elektrischen Durchgangsstecker einsetzen, mit dem sich dann gleichermaßen auch die einzelne elektrische Leitung der Bordnetzleitung verbunden wird.

Nach der Fig. 2 besitzt das (offene) quaderförmige Gehäuseunterteil 66 einen massiven Gehäuseendbereich 63, dem drei Kontaktkammern, die zueinander beabstandet liegen und dem Verlauf der Längsachse des Gehäuseunterteiles 66 folgen, ausgenommen sind. Demgegenüber befindet sich stirnseitig dem massiven Gehäuseendbereich 63 gegenüberliegend ein weiterer Gehäuseendbereich als Teilbereich der Gehäusewand, dem die Gehäuseeinführung(en) 64 ausgenommen ist (sind), durch welche das Heizband 2 (oder - im Einzelfall - die elektrischen Leitungen der Bordnetzleitung oder der Verlängerungsleitung) in den Innenraum 61 eingeführt wird (werden). In der einzelnen Kontaktkammer sitzt jeweils ein Stiftkontakt 723, der umfänglich der Kontaktkammer eingepaßt ist. Die beispielgemäß angeordneten drei Stiftkontakte 723 weisen außerhalb der Kontaktkammer am freien Ende einen Quetschbereich auf, der den unmittelbaren Verbindungsbereich mit den elektrischen Leitungen des Heizbandes 2 (oder - im Einzelfall - der elektrischen Leitungen der Bordnetzleitung oder der Verlängerungsleitung) darstellt und sich wenigstens teilweise im Innenraum 61 des Gehäuseunterteiles 66 befindet oder zumindestens dorthin hineinragt. Der einzelne Stiftkontakt 723 besitzt umfänglich und nahe dem Quetschbereich einen Bund 74, der innenseitig dem massiven Gehäuseendbereich 63 anliegt; auf dessen Zweck nachfolgend eingegangen wird. Außerdem sind im Innenraum 61 des Gehäuseunterteiles 66 mehrere (Längs- und Quer-)Nuten ausgenommen, wobei der in den Kontaktkammern nicht fixierte (dem Innenraum 61 frei liegende) Körperbereich der drei Stiftkontakte 723 separat in einer als Längsnut ausgebildeten Aufnahmenut 75 angeordnet und geführt ist; und auch der (den einzelnen Stiftkontakt 723 umspannende) Bund 74 separat in einer quer zur Aufnahmenut 75 (quer zur Längsachse des Gehäuseunterteiles 66 gelegen) liegende Quernut angeordnet und geführt ist. Dabei ist der betreffende Stiftkontakt 723 durch einen Haltering 76 um den Bund 74 in der Aufnahmenut 75 verriegelt.
Der massive Gehäuseendbereich 63 ist außerdem derart gestaltet, daß er außenwandseitig dem Gehäuseunterteil 66 in einen nach außerhalb des Gehäuseunterteiles 66 gerichteten (offenen) Führungsbereich 411 des Stiftsteckers 10 überführt wird.

Der Austritt der Stiftkontakte 723 in den Führungsbereich 411 des Stiftsteckers 10 ist an der stirnseitigen Außenwandung mit einem Dichtelement 20 versehen. Am Austritt jedes Stiftes ist am (offenen) Führungsbereich 411 eine kegelige Erhebung am Dichtelement 20 angeformt.

Der Stift des einzelnen Stiftkontaktes 723 ist (nur) teilweise in der betreffenden Kontaktkammer geführt, wobei letzterer teilweise in den Führungsbereich 411 des Stiftsteckers 10, der einem (in der Fig. 3 gezeigten) Führungsbereich 412 des Buchsensteckers 9 kompatibel ist, hineinragt. Dadurch ist (vorgegriffen den Ausführungen zur Fig. 4) der elektrische Kupplungsbereich 41 der einander sich paarweise gegenüberstehenden Stift- und Buchsenstecker 9, 10 durch deren Führungsbereiche 411, 412 abgegrenzt.
Es wird erwähnt, daß die Gehäuseeinführung(en) 64 zusätzlich mit Aussparungen 184 versehen sind, die im montierten Endzustand des Stiftsteckers 10 zu einem (später näher beschriebenen) Zweck mit Klebe-/Vergußmasse 19 ausgefüllt sind.

Die Installation des Heizbandes 2 wird folgendermaßen realisiert. Das durch die Gehäuseeinführung 64 eingeführte Heizband 2 wird mit seinem nicht abgesetzten Bereich im Innenraum 61 des Gehäuseunterteiles 66 derart (auf Länge) positioniert, daß sich die innerhalb des abgesetzten Bereiches freiliegenden elektrischen Leitungen problemlos mit den drei Stiftkontakten 723 anordnen lassen [betriebsmäßig stromführende Leitungen 82 seitlich angeordnet und betriebsmäßig nicht stromführende Leitung 84 (Schutzleiter) mittig angeordnet], wobei die Verbindung der elektrischen Leitungen vor der Einführung separat mit den Stiftkontakten 723 verquetscht werden müssen.

Der nicht abgesetzte Bereich des Heizbandes 2 wird nach einer an sich bekannten Technologie entmantelt, derweise, daß die elektrischen Leitungen des Heizbandes 2 freigelegt werden. Dabei wird der das Heizband 2 außenseitig umhüllende Außenmantel 161 entfernt (abgesetzt) und die als Schutzleitergeflecht ausgeführte betriebsmäßig nicht stromführende Leitung 84 freigelegt, wobei man als Heizband 2 beispielgemäß ein selbstlimitierendes Parallelheizband verwendet. Danach werden die unterhalb dem Innenmantel 13 befindlichen betriebsmäßig stromführenden Leitungen 82 durch Entfernung des Innenmantels 13, oberhalb dem das Schutzleiter-Geflecht liegt, freigelegt und außerdem das Heizelement entsprechend gekürzt. Dann (oder bereits nach der Freilegung) wird das Schutzleiter-Geflecht ausgekämmt und verdrillt, dermaßen, daß sich das verdrillte Ende problemlos mit dem endseitigen Quetschbereich des Stiftkontaktes 723 verbinden läßt. Ein dem Schutzleiter-Geflecht aufgeschrumpfter Schrumpfschlauch 15, der (zu Teilen) oberhalb dem Innenmantel 13 aufliegt, dichtet und isoliert elektrisch diesen mit Kleb-/Vergußmasse 19 vorbehandelten Teil des Übergangsbereiches zusätzlich ab.
Somit befindet sich der (sogenannte) abgesetzte Bereich des Heizbandes 2 im offenen Innenraum 61 des Gehäuseunterteiles 66 des Anschlußgehäuses 6, wobei die Anschlußenden der beiden betriebsmäßig stromführenden Leitungen 82 und des betriebsmäßig nicht stromführenden Leiters 84 des eingeführten selbstlimitierenden Heizbandes 2 mit dem in den Innenraum 61 ragenden Quetschbereich der dort angeordneten drei Stiftkontakte 723 vor der Einführung separat verquetscht wird.

Der Abschluß des vorbeschriebenen Maßnahmenteiles umfaßt außerdem die Realisierung der nachfolgenden im Endzustand angegebenen Zustände.

Der einzelne (innerhalb des offenen Gehäuseunterteiles 66 fest positionierten) Stiftkontakt 723, dem bereits die einzelne elektrische Leitung des Heizbandes 2 anschlossen ist, oder wenigstens der Verbindungsbereich (Quetschbereich) des Stiftkontaktes 723 (mit der ihm angeschlossenen elektrischen Leitung) ist danach allseitig von einer Klebe/Vergußmasse 19 umgeben. Davon sind gleichfalls die in der Aufnahmenut 75 (Längsnut) angeordneten Stiftkontakte 723 (nach den Figuren 2 und 4) betroffen, die zumindestens teilweise von Klebe-/Vergußmasse 19 umgeben sind. Außerdem ist (innerhalb des offenen Gehäuseunterteiles 66) der abgesetzte Bereich sowie der hineinragende Außenmantel 161 des Heizbandes 2 und auch (im vorbeschriebenen Einzelfall) der abgesetzte Bereich der Bordnetzleitung oder der Verlängerungsleitung allseitig von Klebe-/Vergußmasse 19 umgeben und vollständig gegen Feuchtigkeits- und Flüssigkeitseintritt bei extrem niedrigen Druckverhältnissen zur Gewährleistung der Dichtigkeitsanforderungen abgedichtet.

Weiterhin ist der Innenraum 66 des Anschlußgehäuses 6 [im Endzustand der körperverbundenen Gehäuseteile (Gehäusedeckel mit Gehäuseunterteil 66) und im abgeschlossenen Stadium der vorgenannten elektrischen Verbindungen] allseitig mit Klebe-/Vergußmasse 19 gefüllt. Eine in das Gehäuseunterteil 66 eingelassene durchgehende Füllbohrung 181 wäre eine alternative Ausführung zum Ausfüllen mit Klebe-/Vergußmasse 19.

Die den Gehäuseeinführung(en) 64 (nach den Figuren 2 bis 4) ausgenommenen Aussparungen 184 sind - wie vorerwähnt - im Endzustand ebenso mit der Klebe-/Vergußmasse 19 allseitig ausgefüllt, damit das Anschlußgehäuse 6 dort gegen Feuchtigkeits-und Flüssigkeitseintritt geschützt ist.

Nach dem Abschluß der elektrischen Installation und der vorbehandelnden Maßnahmen wird der Innenraum 61 des mit dem Gehäusedeckel verschweißten Gehäuseunterteiles 66 mit Klebe-/Vergußmasse 19 gefüllt, derart, daß der Innenraum 61 vollständig mit Klebe-/Vergußmasse abgedichtet wird, so daß alle im Innenraum 61 angeordneten elektrischen Komponenten bis einschließlich an die Gehäuseinnenwandung 62 des Anschlußgehäuses 6 allseitig von Klebe-/Vergußmasse 19 umgeben sind. Der andauernde Austritt der Klebe-/Vergußmasse 19 aus einer in das Gehäuseunterteil 66 eingelassene durchgehende Entlüftungsbohrung 182 (während der Befüllung) signalisiert, daß der Innenraum 61 des Anschlußgehäuses 6 und die Verbindungselemente 7 allseitig von Klebe-/Vergußmasse 19 umgeben sind und damit durch die Klebe-/Vergußmasse 19 keine Luftanteile eingeschlossen werden. Nach der anschließenden Aushärtung der Klebe-/Vergußmasse 19 ist der Innenraum des Anschlußgehäuse 6 allseitig mit Klebe/Vergußmasse abgedichtet.

Der in der Fig. 3 dargestellte Buchsenstecker 9 ist die Ausführung des Stiftsteckers 10 nach Fig. 2 ähnlich. Das elektrische Anschlußgehäuse 6 des Buchsensteckers 9 ist im Vergleich dem Anschlußgehäuse 6 des Stiftsteckers 10 ähnlich gestaltet. Es besitzt einen nahezu gleichartigen Aufbau (offenes quaderförmiges Gehäuseunterteil 66 mit massivem Endbereich, dem gleichartige angeordnete Kontaktkammern ausgenommen sind; dem Gehäuseunterteil 66 aufliegender und verschweißter Gehäusedeckel; ect.).

Der Buchsenstecker 9 unterscheidet sich gegenüber dem Stiftstecker 10 durch folgende charakteristischen Merkmale.

In den drei Kontaktkammern, die in gleicher Art dem massiven Gehäuseendbereich 63 ausgenommen sind, sitzen die als elektrische Verbindungselemente 7 ausgebildeten Buchsenkontakte 77, wobei der Körperumfang des einzelnen Buchsenkontaktes 9 dem (in Richtung der Längsachse des Gehäuseunterteiles 66 verlaufenden und den Gehäuseendbereich 63 durchdringenden) Querschnitt der einzelnen Kontaktkammer eingepaßt ist.
Danach weisen die beispielgemäß angeordneten drei Buchsenkontakte 77 außerhalb der Kontaktkammer am freien Ende einen Quetschbereich auf, der den unmittelbaren Verbindungsbereich mit den elektrischen Leitungen des Heizbandes 2 (oder auch - im Einzelfall - der elektrischen Leitungen der Bordnetzleitung oder der Verlängerungsleitung) darstellt und sich wenigstens teilweise im Innenraum 61 des Gehäuseunterteiles 66 befindet oder zumindestens dorthin hineinragt. Der einzelne Buchsenkontakt 77 besitzt umfänglich und nahe dem Quetschbereich einen Bund 74, der innenseitig dem massiven Gehäuseendbereich 63 anliegt; dessen Zweck nachfolgend erläutert wird. Außerdem sind im Innenraum 61 des Gehäuseunterteiles 66 mehrere (Längs- und Quer)Nuten ausgenommen, wobei der in den Kontaktkammern nicht fixierte (dem Innenraum 61 frei liegende) Körperbereich der drei Buchsenkontakte 77 separat in einer als Längsnut ausgebildeten Aufnahmenut 75 angeordnet und geführt ist: und auch der (den einzelnen Buchsenkontakt 77 umspannende) Bund 74 separat in einer quer zur Aufnahmenut 75 (quer zur Längsachse des Gehäuseunterteiles 66 gelegen) liegende Quernut angeordnet ist. Dabei ist der betreffende Buchsenkontakt 77 durch einen Haltering 76 um den Bund 74 in der Aufnahmenut 75 verriegelt.

Der massive Gehäuseendbereich 63 ist außerdem derart gestaltet, daß er außenwandseitig dem Gehäuseunterteil 66 in einen nach außerhalb des Gehäuseunterteiles 66 gerichteten (geschlossenen) Führungsbereich 412 des Buchsensteckers 9, der dem Führungsbereich 411 des Stiftsteckers 10 (nach Fig.2) kompatibel ist, übergeht.

Dabei schließt die Büchse des Buchsenkontaktes 77 nahezu mit der stirnseitig liegenden Außenwandung des massiven Gehäuseendbereiches 63 ab, wobei das (nicht quetschbare) Ende der Büchse bis an einen der einzelnen Kontaktkammer trichterförmig ausgenommenen Austritt reicht. Der kleine Durchmesser des Austrittes entspricht dem Innendurchmesser der Büchse des Buchsensteckers 77, dessen größerer Durchmesser mit der stirnseitig dem Gehäuseunterteil 66 liegenden Außenwandung des massiven Gehäuseendbereiches 66 abschließt.

Die elektrischen Leitungen des Heizbandes 2 sind nach der zuvor beschriebenen Art und Weise (gemäß den Ausführungen bezüglich Fig. 2) den betreffenden Buchsenkontakten 77 einzeln und unlösbar (mit dem Quetschbereich des Buchsenkontaktes 77 verquetscht) angeschlossen.

Die (vor dem Abschluß der elektrischen-Installation) vorzunehmenden vorbehandelnden Maßnahmen an den abzudichtenden Stellen im Innenraum 61 des Gehäuseunterteiles 66 und das mechanische Abdichten des deckelverschweißten Anschlußgehäuses 6 geschieht gleichermaßen nach der (bezüglich Fig. 2) vorbeschriebenen Technologie.

In der Fig. 4 wird die elektrische Kupplung des Buchsensteckers 9 (nach Fig. 3) mit dem Stiftstecker 10 (nach Fig. 2) im mechanisch verriegelten Endzustand gezeigt. Es wird (den vorangestellten Ausführungen) ergänzt, daß der Austritt der Stiftkontakte 723, die in den Führungsbereich des Stiftsteckers 10 hineinragen, mit einem Dichtelement 20 versehen sind. Das Dichtelement 20 weist angeformte kegelförmige Erhebungen pro Stiftkontakt-Austritt auf. Bei diesem Dichtelement 20 handelt es sich um eine Interface-Dichtung, die innerhalb des offenen Führungsbereiches 411 des Stiftsteckers 10 der stirnseitigen Außenwandung des massiven Gehäuseendbereiches 63 zwischen den dort austretenden Stiften der Stiftkontakte 723 flach anliegt, wobei die angeformte kegelige Erhebung des Dichtelementes 20 des Stiftsteckers 10 in den trichterförmigen Austritten des Buchsensteckers 9 hineinragt und abdichtet. Die elektrische Kupplung des Buchsensteckers 9 mit dem Stiftstecker 10 wird innerhalb des Kuppelbereiches 41 dermaßen vollzogen, wonach der massive Führungsbereich 412 des Buchsensteckers 9 dem offenen Führungsbereich 411 des Stiftsteckers 10 eingeführt wird.

Da die räumliche Lage der Stiftkontakte 10 mit denen der Buchsenkontakte 9 übereinstimmt, wird durch das Einführen der Stifte des Stiftkontaktes 10 in die Büchsen der Buchsenkontakte 9 die elektrische Kupplung der beiden Stecker mit einer elektrischen Steckverbindung vollzogen. Dabei wird die Dichtheit (vor möglichem Flüssigkeits-und / oder Feuchtigkeitseintritt) im Kupplungsbereich durch das separat angeordnete Dichtelement 20 zwischen den Verbindungselementen 7 unterstützt.

Zudem ist am Anschlußgehäuse 6 des Stiftsteckers 10 drehbeweglich ein Verriegelungselement 23 gelagert, das in ein Halteelement 24, das dem Anschlußgehäuse 6 des Buchsensteckers 9 angeformt ist, rastet. Dabei handelt es sich um einen als Verriegelungselement 23, das die Gestalt eines Bügels besitzt. Der Bügel überspannt den massiven Gehäuseendbereich 63 des Buchsensteckers 9. Er wird einem als Halteelement 24 ausgebildeten Nasenkörper mit seinem (nicht drehbeweglich befestigten) freien Ende des Verriegelungselementes 23 eingerastet. Da diese Verriegelungselemente beiderseitig der Seitenwände der Gehäuseunterteile 66 (der Anschlußgehäuse 6) des Buchsen-und Stiftsteckers 9, 10 angeordnet sind, wird einerseits durch die Doppelverriegelung eine einseitige mechanische Belastung des massiven Gehäuseendbereiches 63 innerhalb der Führungsbereiche 411, 412 des Stift- und Buchsensteckers 9, 10 verhindert und wird andererseits das Dichtelement 20 mit dem nötigen Anpreßdruck belastet.

Allgemein wird nachfolgendes ergänzt:
Alternativ kann der Gehäusedeckel auf die ganze Länge des Buchsensteckers 9 oder des Stiftsteckers 10 bezogen werden, wobei die Führungsbohrungen der Kontaktkammern für die Stiftkontakte 723 und Buchsenkontakte 77 durch offene Nuten ersetzt werden und ebenso die Gehäuseendbereiche 63. Die im Innenraum 61 des Gehäuseunterteiles 66 mit den Stiftkontakten 723 und den Buchsenkontakten 77 verquetschten Anschlußenden der beiden betriebsmäßig stromführenden Leitungen 82 sind seitlich angeordnet und die betriebsmäßig nicht stromführende Leitung 84 ist mittig angeordnet.

## Patentansprüche

1. Heizleiter-Verbindungssystem in einem Flugzeug, umfassend mehrere Heizleiter-Anordnungen (1, 12), die sich mittels elektrischer Kupplungselemente miteinander elektrisch kuppeln lassen,
**dadurch gekennzeichnet**, daß alle Heizleiter-Anordnungen (1, 12) wenigstens ein Kupplungselement, das als elektrischer Stift- oder Buchsenstecker (9, 10) ausgebildet ist, aufweisen, und dabei der Stift- und / oder der Buchsenstecker (9, 10) der einzelnen Heizleiter-Anordnung (1, 12) mit einem Heizband (2) verbunden ist, und daß sich der Stiftstecker (10) einer ersten Heizleiter-Anordnung (1) mit dem Buchsenstecker (9) einer zweiten Heizleiter-Anordnung (12), die sich paarweise gegenüberstehen und einen elektrischen Kuppelbereich (41) bilden, elektrisch kuppeln und mechanisch verriegeln läßt.

2. Heizleiter-Verbindungssystem nach Anspruch 1,
**dadurch gekennzeichnet**,
- daß alle Stift- und Buchsenstecker (9, 10) ein elektrisches Anschlußgehäuse (6), das mit ein Bestandteil eines jeden Stift- und Buchsensteckers (9, 10) ist und das mindestens eine Gehäuseeinführung (64) besitzt, aufweisen und wenigstens ein elektrisches Verbindungselement (7) innerhalb des Buchsen- und Stiftsteckers (9, 10) angeordnet ist und der Innenraum (61) des Anschlußgehäuses (6) allseitig mit einem Abdichtmittel (19) gefüllt ist,
- daß das Heizband (2) mit seinem Außenmantel (161) durch die Gehäuseeinführung (64) geführt ist, wobei mindestens dessen abgesetzter Bereich sich im Innenraum (61) des elektrischen Anschlußgehäuses (6) befindet,
- daß das Heizbandes (2) wenigstens eine elektrische Leitung aufweist, die mit dem Verbindungselement (7) verbunden ist,
- daß das Verbindungselement (7) in einer gehäuseseitig eingelassenen Aufnahmenut (75) im Innenraum (61) des Anschlußgehäuses (6) angeordnet und vom Abdichtmittel (19) umgeben ist, und daß wenigstens der Quetschbereich des Verbindungselementes (7), der sich innerhalb des Innenraumes (61) des Anschlußgehäuses (6) befindet, vom Abdichtmittel (19) umgeben ist,
- daß der Innenraum (61) des Anschlußgehäuses (6) und der dort befindliche abgesetzte Bereich des Heizbandes (2) allseitig vom Abdichtmittel (19) umgeben sind und damit vollständig gegen Feuchtigkeits- und Flüssigkeitseintritt bei extrem niedrigen Druckverhältnissen zur Gewährleistung der Dichtigkeitsanforderungen abgedichtet sind.

3. Heizleiter-Verbindungssystem nach Anspruch 2,
**dadurch gekennzeichnet**, daß das Verbindungselement, (7) des Stiftsteckers (10) ein Stiftkontakt (723) und des Buchsensteckers (9) ein Buchsenkontakt (77) ist, deren Quetschbereich sich wenigstens teilweise im Innenraum (61) des Anschlußgehäuses (6) befindet oder zumindestens dorthin hineinragt, und daß innerhalb eines dem Stift- und/ oder Buchsenstecker (9, 10) integrierten Gehäuseendbereiches (63) der Buchsen- und / oder Stiftkontakt (77, 723) angeordnet ist.

4. Heizleiter-Verbindungssystem nach Anspruch 2,
**dadurch gekennzeichnet**, daß innerhalb des Stift- und Buchsensteckers (9, 10) mehrere Verbindungselemente (7), die als Stift und / oder Buchsenkontakt (77, 723) ausgebildet sind, dem Verlauf einer Längsachse des Anschlußgehäuses (6) folgend angeordnet sind, die zueinander beabstandet geführt sind, wobei der Austritt der Stiftkontakte (723), die in einen Führungsbereich (411) des Stiftsteckers (10) hineinragen, mit einem Dichtelement (20) versehen sind.

5. Heizleiter-Verbindungssystem nach Anspruch 2,
**dadurch gekennzeichnet**, daß die Gehäuseeinführung (64) jedes Stift- und Buchsensteckers (9, 10) mit Aussparungen (184) versehen ist, welche außerhalb des Innenraumes (61) des Anschlußgehäuses (6) mit dem Abdichtmittel (19) gefüllt sind.

6. Heizleiter-Verbindungssystem nach Anspruch 1,
**dadurch gekennzeichnet**, daß das Heizband (2) mehrere elektrische Leitungen aufweist, von denen wenigstens eine Leitung eine betriebsmäßig stromführende Leitung (82) und eine weitere Leitung eine betriebsmäßig nicht stromführende Leitung (84) ist, die durch einen Innenmantel (13) zueinander isoliert sind, wobei die betriebsmäßig nicht stromführende Leitung (84) ein elektrisch leitendes Geflecht ist, das dem isolierenden Innenmantel (13) aufliegt, welches der Außenmantel (161) umhüllt.

7. Heizleiter-Verbindungssystem nach Anspruch 1
**dadurch gekennzeichnet**, daß wenigstens zwei Heizleiter-Anordnungen (1, 12) miteinander elektrisch gekuppelt sind, denen ein Anschlußmodul zwischengeschalten ist.

8. Heizleiter-Verbindungssystem nach Anspruch 7,
dadurch gekennzeichnet, daß zwischen dem Stiftstecker (10) der ersten Heizleiter-Anordnung (1) und dem Buchsenstecker (9) der zweiten Heizleiter-Anordnung (12) das Anschlußmodul geschalten ist, dem zwei Heizbänder (2) unlösbar angeschlossen sind, derart, daß den freien Enden dieser beiden Heizbänder (2) ein weiterer Buchsen- oder Stiftstecker fest angeschlossen ist, wobei der Stiftstecker (10) der ersten Heizleiter-Anordnung (1) mit dem weiteren Buchsenstecker und der Buchsenstecker der zweiten Heizleiter-Anordnung (12) mit dem weiteren Stiftstecker paarweise elektrisch gekuppelt ist.

9. Heizleiter-Verbindungssystem nach Anspruch 1,
**dadurch gekennzeichnet**, daß das Heizband (2) ein Widerstands- oder Parallelheizband ist, das als Ein- oder Mehrader-Heizband ausgebildet und als Flach- oder Rundheizband mit verschiedenen Querschnitten ausgeführt ausgeführt ist.

10. Heizleiter-Verbindungssystem nach Anspruch 9,
**dadurch gekennzeichnet**, daß das Heizband (2) mit einem selbstlimitierenden Heizband realisiert ist.

11. Heizleiter-Verbindungssystem nach Anspruch 1,
**dadurch gekennzeichnet**, daß das Heizband (2) der Heizleiter-Anordnungen (1, 12) den Rohrleitungen eines Flugzeuges und deren zugeordneten Armaturen und Zubehör befestigt sind.

12. Heizleiter-Verbindungssystem nach Anspruch 2,
**dadurch gekennzeichnet**, daß das Anschlußgehäuse (6) wenigstens einen massiven Gehäuseendbereich (63) mit in seiner Längsachse angeordneten Kontaktkammern aufweist.

13. Heizleiter-Verbindungssystem nach Anspruch 2,
**dadurch gekennzeichnet**, daß das Verbindungselement (7) als Stift- oder Buchsenkontakt (723, 77) ausgeführt ist, der einen Bund (74) und einen Quetschbereich aufweist, der sich im Innenraum (61) des Anschlußgehäuses (6) befindet oder zumindestens dorthin hineinragt, wobei das Verbindungselement (7) durch einen Haltering (76) um den Bund (74) verriegelt ist.

14. Heizleiter-Verbindungssystem nach den Ansprüchen 12 und 13,
**dadurch gekennzeichnet**, daß die einzelne Kontaktkammer zur Aufnahme des Buchsen- und / oder eines Stiftkontaktes (723, 77) geeignet ist.

15. Heizleiter-Verbindungssystem nach den Ansprüchen 2 bis 4 und 12,
**dadurch gekennzeichnet**, daß die Büchse des Buchsenkontaktes (77) in der Kontaktkammer und der Stift des Stiftkontaktes (723) teilweise in der Kontaktkammer geführt ist, wobei letzterer teilweise in den Führungsbereich (411) des Stiftsteckers (10), der einem Führungsbereich (412) des Buchsensteckers (9) kompatibel ist, hineinragt, wobei der elektrische Kuppelbereich (41) der einander sich paarweise gegenüberstehenden Stift- und Buchsenstecker (9, 10) durch deren Führungsbereiche (411, 412) abgegrenzt ist.

16. Heizleiter-Verbindungssystem nach Anspruch 2,
**dadurch gekennzeichnet**, daß am Anschlußgehäuse (6) des Stiftsteckers (10) ein Verriegelungselement (23) drehbeweglich gelagert ist, das in ein Halteelement (24), das dem Anschlußgehäuse (6) des Buchsensteckers (9) angeformt ist, rastet.

17. Heizleiter-Verbindungssystem nach Anspruch 2,
**dadurch gekennzeichnet**, daß das in der Aufnahmenut (75) angeordnete Verbindungselement (7) teilweise vom Abdichtmittel (19) umgeben ist.

18. Heizleiter-Verbindungssystem nach Anspruch 2,
**dadurch gekennzeichnet**, daß der Quetschbereich des Verbindungselementes (7), der sich innerhalb des Innenraumes (61) des Anschlußgehäuses (6) befindet, vom Abdichtmittel (19) umgeben ist.

19. Heizleiter-Verbindungssystem nach Anspruch 2,
**dadurch gekennzeichnet**, daß das Anschlußgehäuse (6) aus einem offenen Gehäuseunterteil (66) und einem Gehäusedeckel zusammengesetzt ist, die miteinander kraft- und / oder formschlüssig verbunden sind, wobei die Gehäuseeinführung (64) dem Gehäuseunterteil (66) ausgenommen ist, und daß wenigstens der Quetschtiereich der Verbindungselemente (7), der sich innerhalb des offenen Bereiches des Gehäuseunterteiles (66) befindet, allseitig vom Abdichtmittel (19) umgeben ist.

20. Heizleiter-Verbindungssystem nach den Ansprüchen 2 und 3,
**dadurch gekennzeichnet**, daß allgemein das Verbindungselement (7) und im besonderen der Buchsen- und / oder der Stiftkontakt (77, 723) mindestens mit einem im Quetschbereich und in Längsrichtung angeordnetem Sackloch versehen sind, damit die Abwanderung der dort eingeschlossenen Feuchtigkeit oder Flüssigsubstanz verhindert und weitergeleitete Kapilarwirkung durch das Verbindungselement (7) vermieden wird.

21. Heizleiter-Verbindungssystem nach den Ansprüchen 2, 5, 17 bis 19,
**dadurch gekennzeichnet**, daß das Abdichtmittel (19) ein Klebdichtstoff ist, der neben seinem Kleb- und Dichtverhalten auch elektrisch und wärmetechnisch isoliert.

22. Heizleiter-Verbindungssystem nach Anspruch 21,
**dadurch gekennzeichnet**, daß man als Klebdichtstoff eine Klebe/Vergußmasse verwendet, die sich aus einem zweikomponentigen, organischen Material zusammensetzt und auf einem Epoxy/Polyamid basiert, der ein Vergießen und Verkleben der Installationsbereiche im Innenraum (61) des Anschlußgehäuses (6) realisiert und ein allseitiges Vergießen des Innenraumes (61) bis an die Gehäuseinnenwandung (62) des kunststoffartigen Anschlußgehäuses (6) reichend ohne weitere Lufteinschlüsse vollbringt.

23. Heizleiter-Verbindungssystem nach den Ansprüchen 12, 14 und 19,
**dadurch gekennzeichnet**, daß der Gehäusedeckel der ganzen Länge des freiliegenden Wanddickenverlaufes des Gehäuseunterteiles (66) aufliegt, wobei die Kontaktkammern durch offene Nuten ersetzt sind und ebenso die Gehäuseendbereiche 63, so daß sich die Bereiche des Gehäusedeckels und der freien Enden der Wandung des Gehäuseunterteiles (66) formschlüssig durch Verschweißung verbinden lassen.
